# EUROPÄISCHE PATENTSCHRIFT

(11) **EP 2 228 116 B1**
(45) Veröffentlichungstag und Bekanntmachung des Hinweises auf die Patenterteilung: **18.12.2013**
(21) Anmeldenummer: 10155575.3
(22) Anmeldetag: 05.03.2010
(51) Int. Cl.: B01D 46/00

(54) **System aus einer einem Nutzfahrzeug zugeordneten Luftaufbereitungsanlage und einer Luftfilterpatrone**
System comprising an air preparation assembly allocated to a commercial vehicle and an air filter cartridge
Système composé d'une installation de préparation de l'air et d'une cartouche de filtre à air agencées dans un véhicule utilitaire

(30) Priorität: 05.03.2009 DE 102009011824
(43) Veröffentlichungstag der Anmeldung: 15.09.2010
(73) Patentinhaber: Knorr-Bremse Systeme für Nutzfahrzeuge GmbH, 80809 München (DE)
(72) Erfinder: Hilberer, Eduard, 68766, Hockenheim (DE); Krockenberger, Klaus, 90547, Stein (DE); Uhland, Matthias, 89073, Ulm (DE); Kandár, Tibor, 8773, Kacorlak (HU)
(74) Vertreter: Schönmann, Kurt

(56) Entgegenhaltungen:
- WO-A1-00/32298
- WO-A1-03/070351
- WO-A1-03/076342
- DE-A1- 19 627 595
- US-A1- 2002 144 937

## Beschreibung

Die Erfindung betrifft ein System aus einer in einem Nutzfahrzeug angeordneten Luftaufbereitungsanlage und einer Luftfilterpatrone zur Montage an der Luftaufbereitungsanlage, wobei die Luftfilterpatrone einen Speicher umfassende Identifikationsmittel aufweist, die im montierten Zustand mit einer an der Luftaufbereitungsanlage angeordneten Erfassungseinrichtung gekoppelt sind, wobei der Informationsgehalt des Speichers durch die Erfassungseinrichtung erfassbar ist, wobei die Luftaufbereitungsanlage und die Luftfilterpatrone Einrichtungen umfassen, die im montierten Zustand der Luftfilterpatronemiteinander koppelbar sind und zumindest eine elektrische Verbindung zwischen der Erfassungseinrichtung und den Identifikationsmitteln herstellen, und wobei die Luftfilterpatrone zur Montage an der Lauftaufbereitungsanlage ein Schraubgewinde umfasst.

Die Erfindung betrifft weiterhin eine Luftfilterpatrone zur Montage an einer in einem Nutzfahrzeug angeordneten Luftaufbereitungsanlage, wobei die Luftfilterpatrone einen Speicher umfassende Identifikationsmittel aufweist, die im montierten Zustand mit einer an der Luftaufbereitungsanlage angeordneten Erfassungseinrichtung gekoppelt sind, wobei der Informationsgehalt des Speichers durch die Erfassungseinrichtung erfassbar ist, wobei die Luftaufbereitungsanlage und die Luftfilterpatrone Einrichtungen umfassen, die im montierten Zustand der Luftfilterpatrone miteinander koppelbar sind und zumindest eine elektrische Verbindung zwischen der Erfassungseinrichtung und den Identifikationsmitteln herstellen, und wobei die Luftfilterpatrone zur Montage an der Lauftaufbereitungsanlage ein Schraubgewinde umfasst.

Die Erfindung betrifft weiterhin eine Luftaufbereitungsanlage, die zur Aufnahme einer Luftfilterpatrone ausgelegt ist, wobei die Luftfilterpatrone einen Speicher umfassende Identifikationsmittel aufweist, die im montierten Zustand mit einer an der Luftaufbereitungsanlage angeordneten Erfassungseinrichtung gekoppelt sind, wobei der Informationsgehalt des Speichers durch die Erfassungseinrichtung erfassbar ist, wobei die Luftaufbereitungsanlage und die Luftfilterpatrone Einrichtungen umfassen, die im montierten Zustand der Luftfilterpatrone miteinander koppelbar sind und zumindest eine elektrische Verbindung zwischen der Erfassungseinrichtung und den Identifikationsmitteln herstellen, und wobei die Luftfilterpatrone zur Montage an der Lauftaufbereitungsanlage ein Schraubgewinde umfasst.

Viele in Nutzfahrzeugen angeordnete Teilsysteme werden mit Druckluft angetrieben beziehungsweise mit dieser betrieben. Derartige Teilsysteme, die Druckluft verbrauchen, sind beispielsweise eine pneumatische Bremsanlage, eine Luftfederung oder Liftachseinrichtungen, wobei beim Betrieb dieser Teilsysteme Druckluft verbraucht wird. Diesen und anderen Verbrauchern wird die Druckluft über eine Luftaufbereitungsanlage zur Verfügung gestellt. Moderne Luftaufbereitungsanlagen arbeiten auf der Grundlage einer elektronischen Steuerung und sie enthalten für den Betrieb des Druckluftsystems des Nutzfahrzeugs wichtige Komponenten, beispielsweise einen Druckregler, ein Mehrkreisschutzventil und eine Luftfilterpatrone, die der Reinigung und Trocknung der der Luftaufbereitungsanlage zugeführten Druckluft dient.

Üblicherweise werden Luftfilterpatronen, die eine begrenzte Lebenserwartung aufweisen, auf ein Ventilgehäuse der Luftaufbereitungsanlage aufgeschraubt beziehungsweise aufgesetzt, wobei in letzterem Fall beispielsweise ein Bajonettverschluss zur sicheren Arretierung der Luftfilterpatrone vorgesehen sein kann. Da die Anschlussmaße der Luftfilterpatronen aus Kostengründen größtenteils standardisiert sind, jedoch trotz dieser identischen Anschlussmaße durchaus unterschiedliche Luftfilterpatronen, die insbesondere verschiedene Wirkungsweisen und/oder verschiedene Trocknungsbeziehungsweise Reinigungsleistungen aufweisen, kann auch eine für eine bestimmte Luftaufbereitungsanlage ungeeignete Luftfilterpatrone montiert werden. Durch die falsche Wirkungsweise beziehungsweise durch eine unzureichende Reinigungsleistung wird die Laufleistung der Luftaufbereitungsanlage jedoch erheblich reduziert, wobei dies schlimmstenfalls erst im Schadensfall bemerkt wird.

Neben der dargestellten Problematik besteht weiterhin ein Bedürfnis, den Wechsel einer Luftfilterpatrone zum richtigen Zeitpunkt vorzunehmen, das heißt nicht zu spät, um die Funktionstüchtigkeit der Druckluftversorgung aufrechtzuerhalten, aber auch nicht zu früh, um nicht eine eigentlich noch funktionstüchtige Luftfilterpatrone entsorgen zu müssen.

Zur Lösung dieser Problematik ist beispielsweise aus der WO 2007/045318 bekannt, die Luftfilterpatrone mit einem Transponder umfassenden Identifikationsmittel auszustatten, wobei die in den Identifikationsmitteln gespeicherte Information über eine an der Luftaufbereitungsanlage angeordnete Erfassungseinrichtung über eine Funkstrecke erfassbar ist.

Die WO 00/32298 A1 beschreibt ein System aus einem Gehäuse und einem mit diesem Gehäuse koppelbaren Filterelement, wobei im montierten Zustand zwischen dem Gehäuse und dem Filterelement ein elektrischer Kontakt geschlossen wird, sobald die "korrekte Positionierung" des Filterelementes gegenüber dem Gehäuse erreicht ist. Die elektrische Verbindung wird dabei abseits der nicht näher beschriebenen Befestigungsmittel vorgesehen.

Die WO 03/070351 A1 beschreibt ein Gehäuse und eine mit diesem Gehäuse koppelbare Filterpatrone, wobei elektrische Kontaktflächen an der Filterpatrone mit entsprechenden elektrischen Kontaktstiften an dem Gehäuse Stromkreise ausbilden, wenn die Filterpatrone korrekt an dem Gehäuse montiert ist. Die Kontaktflächen und die zugehörigen elektrischen Kontaktstifte sind wieder abseits von den zur Montage der Filterpatrone verwendeten Befestigungsmitteln angeordnet.

Die WO 03/076342 A1 beschreibt ein Gehäuse und eine mit dem Gehäuse koppelbare Filterpatrone, wobei die Filterpatrone einen Schaltkreis mit einem Speicher aufweist, welcher elektrisch mit einem zugehörigen Lesegerät in dem Gehäuse gekoppelt werden kann und nur korrekt ansprechbar ist, wenn die Filterpatrone "ordnungsgemäß" montiert ist. Eine Ausführungsform bezüglich der elektrischen Kontakte ist jedoch nicht beschrieben.

Aus der DE 196 27 595 A1 ist ein Filter bekannt, das elektrisch mit einem Lesegerät verdrahtet werden kann, wobei hinsichtlich der elektrischen Verdrahtung ausgeführt ist, dass diese dauerhaft ausgestaltet sein kann, oder hergestellt werden kann, indem eine Abdeckung des Speicherelementes an dem Filter entfernt wird oder dass diese Abdeckung des Speicherelementes an dem Filter durchdringbar ausgeführt ist.

Aus der US 2002/0144937 A1 ist ein Gehäuse und ein mit diesem Gehäuse koppelbares Fluidfilter bekannt, welches nur in einer bestimmten axialen Orientierung an dem zugehörigen Gehäuse montierbar ist, wobei eine bajonettartige Führungshilfe in Form von Ausnehmungen und Vorsprüngen verwendet wird. In der korrekten Position werden elektrische Kontakte zwischen dem Gehäuse und dem Filter geschlossen, die in einer Fläche abseits von den Befestigungsmitteln angeordnet sind.

Nachteilig bei diesem System ist insbesondere die Störanfälligkeit gegenüber Umwelteinflüssen, beispielsweise durch Interferenz mehrerer Transpondersignale, die beispielsweise von gleichartigen Teilen an verschiedenen Fahrzeugen oder von verschiedenen Teilen an demselben Fahrzeug stammen können.

Der Erfindung liegt die Aufgabe zugrunde, die elektrische Verbindung zwischen Luftfilterpatrone und Gehäuse robuster auszuführen.

Diese Aufgabe wird mit den Merkmalen der unabhängigen Ansprüche gelöst.

Vorteilhafte Ausführungsformen der Erfindung sind in den abhängigen Ansprüchen angegeben.

Die Erfindung baut auf dem gattungsgemäßen System dadurch auf, dass der Informationsgehalt des Speichers durch die Erfassungseinrichtung veränderbar ist, dass die Einrichtungen einen Anschluss mit einer Kontaktfläche und einen weiteren Anschluss mit einer weiteren Kontaktfläche umfassen, die in das Schraubgewinde integriert sind, und dass die zumindest eine elektrische Verbindung im montierten Zustand der Luftfilterpatrone über mit der Kontaktfläche und der weiteren Kontaktfläche korrespondierende Kontaktflächen an einem Gehäuse der Luftaufbereitungsanlage geschlossen ist. Auf diese Weise werden Interferenzen sowie Energieverluste durch aus dem System entweichende Streustrahlung soweit wie möglich vermieden. Mit Hilfe eines Schraubgewindes kann die Luftfilterpatrone sicher an der Luftaufbereitungsanlage montiert werden. Durch das Vorsehen elektrischer Kontakte in dem Schraubgewinde kann nach der Montage der Luftfilterpatrone an der Luftaufbereitungsanlage der korrekte Sitz der Luftfilterpatrone überprüft werden.

Nützlicherweise kann vorgesehen sein, dass die Einrichtungen einen Kontaktstift umfassen, der im montierten Zustand der Luftfilterpatrone zumindest eine elektrische Verbindung zwischen der Luftfilterpatrone und der Erfassungseinrichtung schließt. Die Verwendung eines Kontaktstifts erlaubt das zuverlässige Herstellen einer elektrischen Verbindung, wobei der Kontaktstift beispielsweise zugleich zur Vorzentrierung bei der Montage der Luftfilterpatrone vorgesehen sein kann.

Vorteilhafterweise kann dann vorgesehen sein, dass die Einrichtungen einen dem Kontaktstift zugeordneten Anschluss umfassen, der im montierten Zustand der Luftfilterpatrone mit dem Kontaktstift in Kontakt steht.

Es kann vorgesehen sein, dass der Kontaktstift in Kopplungsrichtung beweglich und federvorgespannt ist. Auf diese Weise kann sichergestellt werden, dass der Kontaktstift bei der Montage die elektrische Verbindung schließt und beispielsweise mit dem Anschluss gekoppelt wird, wobei zusätzlich ein Einrasten des Kontaktstifts mit dem Anschluss vorgesehen sein kann.

Vorzugsweise ist vorgesehen, dass der Anschluss in Form einer im Wesentlichen zylindrischen Ausnehmung ausgeführt ist. Durch die im Wesentlichen zylindrische Ausführung des Anschlusses kann eine Vorzentrierung der Luftfilterpatrone bei der Montage gewährleistet werden. Weiterhin können innerhalb der zylindrischen Ausnehmung mehrere gegeneinander isolierte elektrische Verbindungen und eine Rastposition für den Kontaktstift bereitgestellt werden.

Alternativ kann vorgesehen sein, dass der Anschluss in Form einer kreisförmigen Rinne ausgeführt ist. Auf diese Weise kann unabhängig von der Orientierung der Luftfilterpatrone zur Luftaufbereitungsanlage in der Ebene senkrecht zur Kopplungsrichtung bei der Montage eine elektrische Verbindung zwischen den Einrichtungen gewährleistet werden. Auch bei dieser Konstruktion sind mehrere voneinander isolierte elektrische Verbindungen und eine Rastfunktion für den Kontaktstift realisierbar, beispielsweise durch entsprechende Formgebung der Flanken der Rinne.

Besonders bevorzugt ist weiterhin, dass die Luftfilterpatrone zur Montage an der Luftaufbereitungsanlage einen Bajonettverschluss umfasst. Durch einen Bajonettverschluss lässt sich die Luftfilterpatrone an der Luftaufbereitungsanlage sichern, wodurch eine Montage der Luftfilterpatrone an der Luftaufbereitungsanlage ohne aufwendige Drehbewegung der Luftfilterpatrone gegenüber der Luftaufbereitungsanlage möglich wird.

Die gattungsgemäße Luftfilterpatrone wird dadurch weiterentwickelt, dass der Informationsgehalt des Speichers durch die Erfassungseinrichtung veränderbar ist, dass die Einrichtungen einen Anschluss mit einer Kontaktfläche und einen weiteren Anschluss mit einer weiteren Kontaktfläche umfassen, die in das Schraubgewinde integriert sind, und dass die zumindest eine elektrische Verbindung im montierten Zustand der Luftfilterpatrone über mit der Kontaktfläche und der weiteren Kontaktfläche korrespondierende Kontaktflächen an einem Gehäuse der Luftaufbereitungsanlage geschlossen sind.

Die gattungsgemäße Luftaufbereitungsanlage wird dadurch weiterentwickelt, dass der Informationsgehalt des Speichers durch die Erfassungseinrichtung veränderbar ist, dass die Einrichtungen einen Anschluss mit einer Kontaktfläche und einen weiteren Anschluss mit einer weiteren Kontaktfläche umfassen, die in das Schraubgewinde integriert sind, und dass die zumindest eine elektrische Verbindung im montierten Zustand der Luftfilterpatrone über mit der Kontaktfläche und der weiteren Kontaktfläche korrespondierende Kontaktflächen an einem Gehäuse der Luftaufbereitungsanlage geschlossen sind.

Die Vorteile und Besonderheiten des erfindungsgemäßen Systems sind sinngemäß einzeln oder in Kombination auf die Luftfilterpatrone und die Luftaufbereitungsanlage übertragbar, weshalb diese an dieser Stelle nicht nochmals separat beschrieben werden.

Die Erfindung wird nun mit Bezug auf die begleitenden Zeichnungen anhand besonders bevorzugter Ausführungsformen beispielhaft erläutert.

Es zeigen:
- Figur 1: eine schematische Darstellung eines Systems in einer ersten Ausführungsform;
- Figur 2: eine schematische Darstellung eines Systems in einer zweiten Ausführungsform;
- Figur 3: eine schematische Darstellung eines Systems in einer dritten Ausführungsform;
- Figur 4: eine schematische Darstellung eines Systems in einer vierten Ausführungsform;
- Figur 5: eine schematische Darstellung eines Systems in einer fünften Ausführungsform;
- Figur 6: eine seitliche Schnittansicht eines Systems;
- Figur 7: eine seitliche Schnittansicht von Einrichtungen in verbundenem Zustand;
- Figur 8: eine seitliche Schnittansicht eines Systems in einer weiteren Ausführungsform;
- Figur 9: eine Aufsicht auf ein Gehäuse einer Luftaufbereitungsanlage; und
- Figur 10: eine seitliche Schnittansicht eines erfindungsgemäßen Systems mit an einem Schraubgewinde angeordneten elektrischen Kontaktstellen.

In den folgenden Zeichnungen bezeichnen gleiche Bezugszeichen gleiche oder gleichartige Teile

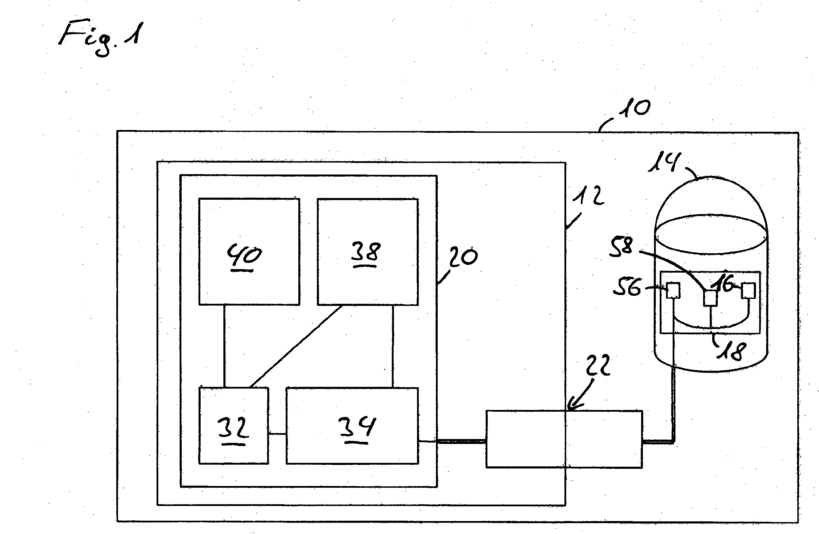

Figur 1 zeigt eine schematische Darstellung eines Systems in einer ersten Ausführungsform. Das dargestellte System 10 umfasst eine Luftaufbereitungsanlage 12 und eine an der Luftaufbereitungsanlage 12 montierte Luftfilterpatrone 14. Es existiert eine elektrische Verbindung 22 zwischen der Luftfilterpatrone 14 und der Luftaufbereitungsanlage 12 oder genauer gesagt zwischen in der Luftfilterpatrone 14 angeordneten Identifikationsmitteln 18 und einer in der Luftaufbereitungsanlage 12 angeordneten Erfassungseinrichtung 20, die je nach Bedarf jedoch auch außerhalb der Luftaufbereitungsanlage 12, zum Beispiel in einer Fahrerkabine eines Fahrzeugs, angeordnet sein kann. Die Luftfilterpatrone 14 umfasst die Identifikationsmittel 18, die beispielsweise einen Mikroprozessor 56, einen Speicher 16 und einen Sensor 58 umfassen können. Die in den Identifikationsmitteln 18 vorhandenen Komponenten 16, 56, 58 können beispielsweise in Serie miteinander verbunden sein und werden über die elektrische Verbindung 22 mit Strom versorgt und durch die Erfassungseinrichtung 20 angesteuert. Zu diesem Zweck kann die elektrische Verbindung 22 eine oder mehrere voneinander elektrisch getrennte Leitungen aufweisen, über die die Kommunikation zwischen der Erfassungseinrichtung 20 und dem Identifikationsmittel 18 abgewickelt wird und die Stromversorgung erfolgt. Beispielsweise kann die elektrische Verbindung 22 als ein Eindraht-Bus ausgeführt sein, der eine serielle Schnittstelle darstellt, die mit einer einzigen Datenader auskommt, die sowohl als Stromversorgung als auch als Sende- und Empfangsleitung genutzt wird. Die elektrische Verbindung 22 kann jedoch auch als eine mehradrige serielle Schnittstelle ausgeführt sein, beispielsweise als ein Zweidraht-Bus. Die Erfassungseinrichtung 20 kann beispielsweise in ein die Luftaufbereitungsanlage 12 steuerndes nicht dargestelltes Steuergerät integriert sein. Die Erfassungseinrichtung 20 umfasst ein Steuergerät 32, ein Interface 34, das mit der elektrischen Verbindung 22 verbunden ist, sowie optional einen Schaltkreis 38 und einen weiteren Schaltkreis 40, die zusätzliche Funktionalitäten, beispielsweise die Auswertung eines Signals des Sensors 58 und/oder eine Verschlüsselung der Kommunikation der Erfassungseinrichtung 20 und dem Mikroprozessor 56 über die elektrische Verbindung 22 bereitstellen können. Das Interface 34 sendet und empfängt die über die elektrische Verbindung 22 laufenden Informationen, wobei beispielsweise eine Hochfrequenz (HF) mit oder ohne Zwischenfrequenz (IF) zur kabelgebundenen Übertragung über die elektrische Verbindung 22 genutzt werden kann. Auf der Seite der Luftfilterpatrone 14 ist der Mikroprozessor 56 für das Senden, Empfangen und eventuell das Ver- und Entschlüsseln von gesendeten und empfangenen Informationen zuständig.

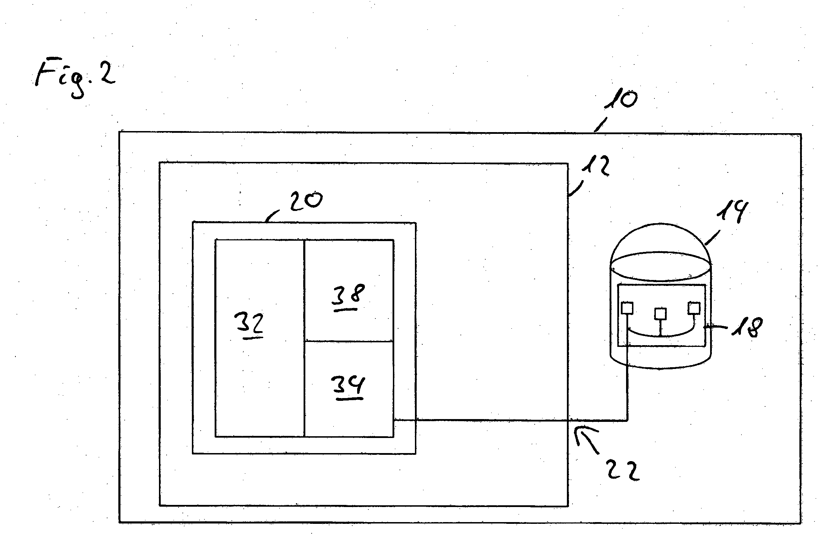

Figur 2 zeigt eine schematische Darstellung eines Systems in einer zweiten Ausführungsform. Im Unterschied zu der aus Figur 1 bekannten Erfassungseinrichtung 20 ist die in Figur 2 dargestellte Erfassungseinrichtung 20 monolithisch aus dem Steuergerät 32, dem Interface 34 und dem Schaltkreis 38, der beispielsweise zur Verschlüsselung der Kommunikation über die elektrische Verbindung 22 dienen kann, aufgebaut, wobei das Steuergerät 32, das Interface 34 und der Schaltkreis 38 in einer einzigen Komponente, beispielsweise einem einzigen Mikrochip, integriert sind. Die elektrische Verbindung zwischen der Erfassungseinrichtung 20 und der Luftfilterpatrone 14 ist vereinfacht als durchgehende Linie dargestellt.

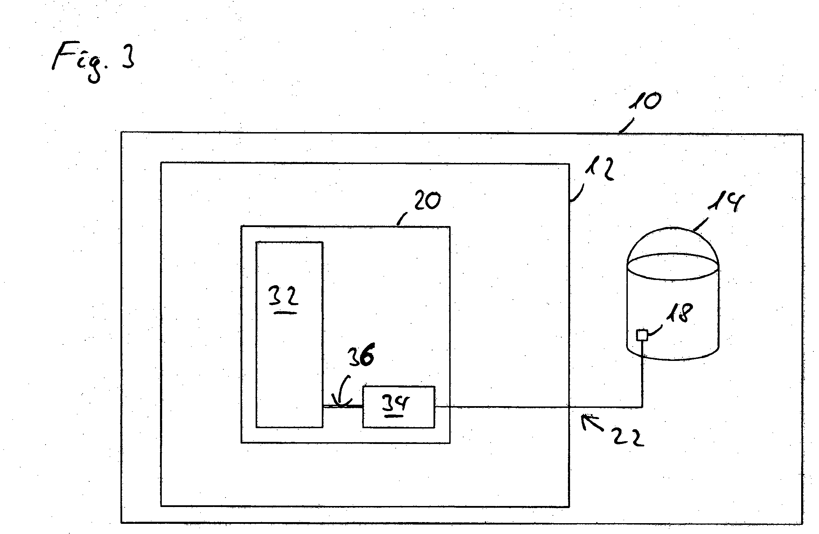

Figur 3 zeigt eine schematische Darstellung eines Systems in einer dritten Ausführungsform. Gemäß der in Figur 3 dargestellten Ausführungsform umfasst die Erfassungseinrichtung 20 das Steuergerät 32 und das Interface 34, wobei das Steuergerät 32 und das Interface 34 über ein UART 36 miteinander gekoppelt sind. Das UART 36, das heißt ein "Universal Asynchronus Receiver Transmitter", erlaubt eine serielle digitale Datenübertragung zwischen dem Steuergerät 32 und dem Interface 34. Die Kopplung zwischen dem Steuergerät 32 und dem Interface 34 kann je nach Bedarf jedoch auch anders realisiert werden.

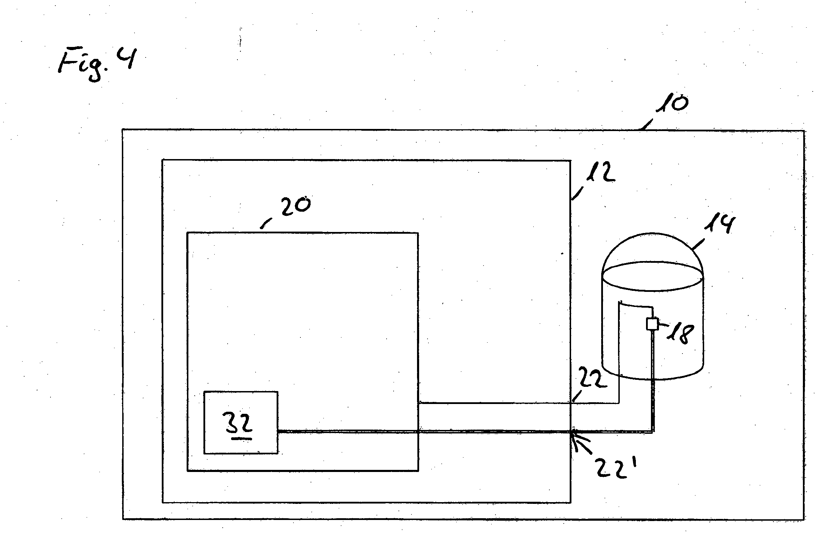

Figur 4 zeigt eine schematische Darstellung eines Systems in einer vierten Ausführungsform. Im Unterschied zu den in den Figuren 1 bis 3 beschriebenen Ausführungsformen weist die in Figur 4 dargestellte vierte Ausführungsform neben der elektrischen Verbindung 22 eine weitere elektrische Verbindung 22' auf. Beispielsweise kann die elektrische Verbindung 22 lediglich für die Stromversorgung der Identifikationsmittel 18 in der Luftfilterpatrone 14 vorgesehen sein, während die weitere elektrische Verbindung 22' für den Datenaustausch zwischen den Informationsmitteln 18 und der Erfassungseinrichtung 20 in der Luftaufbereitungsanlage 12 vorgesehen sein. Je nach Bedarf kann sowohl die elektrische Verbindung 22 als auch die weitere elektrische Verbindung 22' ein oder mehrpolig ausgeführt werden.

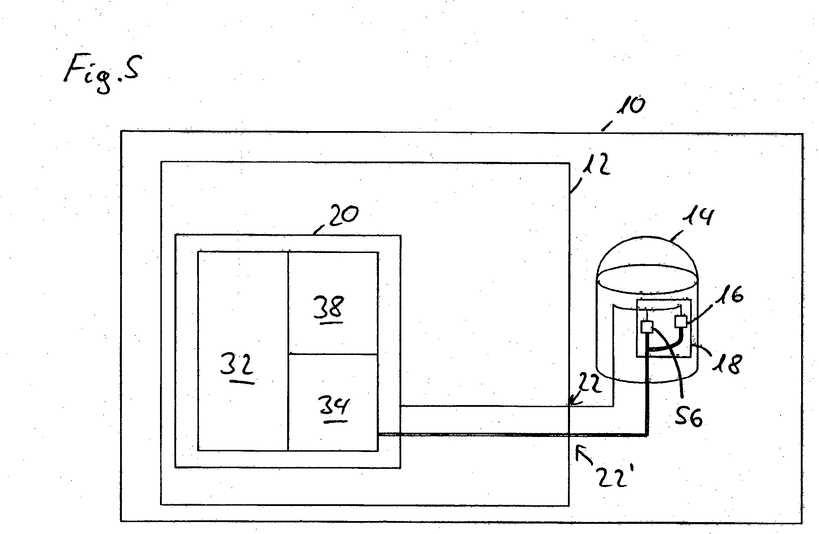

Figur 5 zeigt eine schematische Darstellung eines Systems in einer fünften Ausführungsform. Ausgehend von der in Figur 4 dargestellten vierten Ausführungsform ist beispielhaft das Identifikationsmittel 18 als seriell miteinander gekoppelter Mikroprozessor 56 und Speicher 16 dargestellt. Der aus der ersten Ausführungsform in Figur 1 bereits bekannte optionale Sensor 58, der beispielsweise ein Temperatursensor oder ein Feuchtigkeits- beziehungsweise Kondensatsensor sein kann, entfallen.

Die in den Figuren 1 bis 5 dargestellten Ausführungsformen sind beispielhaft zu verstehen und Merkmale aus einzelnen Ausführungsformen können problemlos zu den anderen Ausführungsformen hinzugefügt werden beziehungsweise durch entsprechende Merkmale aus den anderen Ausführungsformen ersetzt werden.

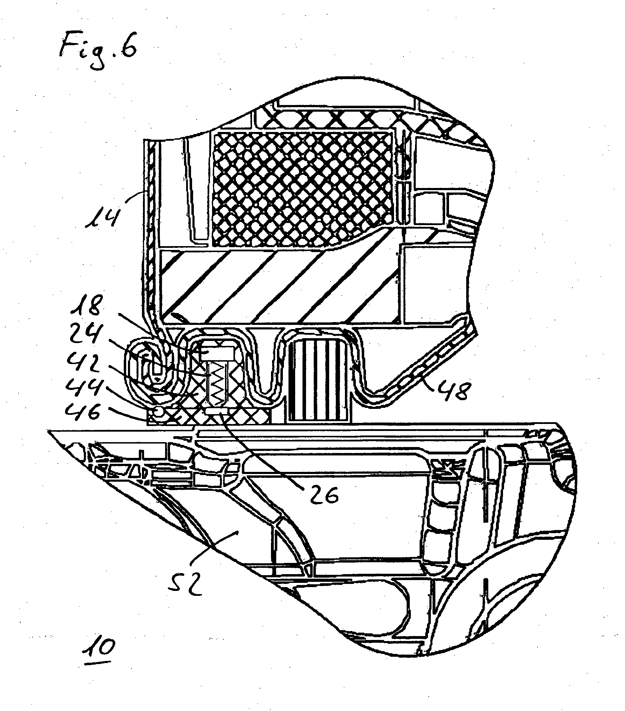

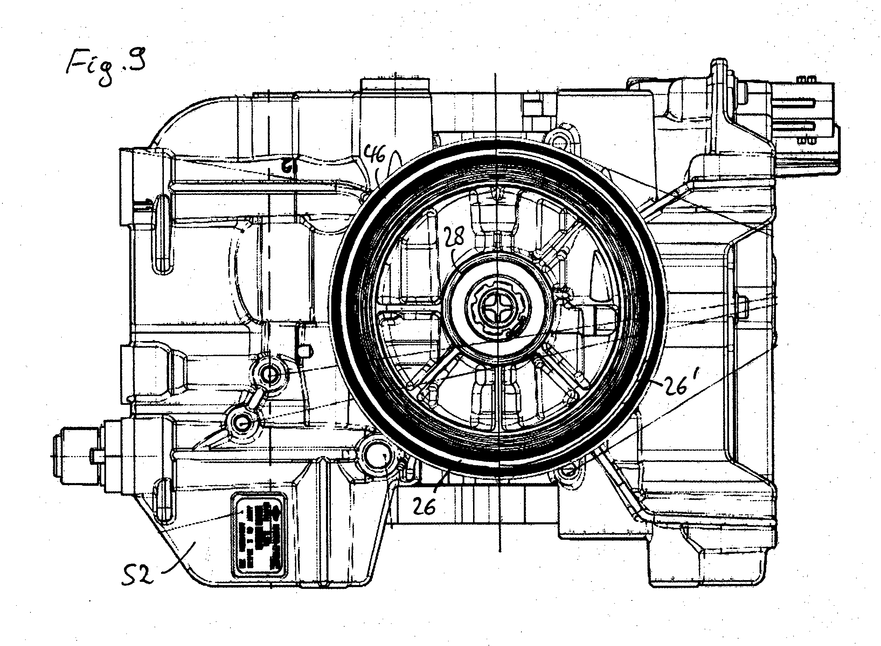

Figur 6 zeigt eine seitliche Schnittansicht eines Systems. Dargestellt ist ein Gehäuse 52 der Luftaufbereitungsanlage, an die die Luftfilterpatrone 14 montiert ist. Die Luftfilterpatrone 14 umfasst eine Bodenplatte 48, die eine Ausnehmung aufweist, in die eine Füllung 42 eingelassen ist. Die Füllung 42 nimmt wiederum die Identifikationsmittel 18 und einen Kontaktstift 24 auf, der in dem dargestellten montierten Zustand der Luftfilterpatrone 14 mit einem ihm zugeordneten Anschluss 26 in Verbindung steht, der wiederum in einen Mantel 46 eingelassen ist. Der Mantel 46 und der Anschluss 26 können beispielsweise als Kreisringe ausgeführt sein, wie im Zusammenhang mit Figur 9 noch beschrieben wird. Zwischen dem Mantel 46 und der Luftfilterpatrone 14 ist weiterhin eine Dichtung 44 vorgesehen, die ein unerwünschtes Entweichen von Druckluft aus dem System 10 verhindert. Die Einrichtungen, die die elektrische Verbindung 22 zwischen den Identifikationsmitteln 18 und der Erfassungseinrichtung 20 herstellen, umfassen bei dieser Ausführungsform also die Füllung 42 mit dem Kontaktstift 24 und den Mantel 46 mit dem Anschluss 26. Je nach Bedarf kann der Kontaktstift 24 beziehungsweise der zugehörige Anschluss 26 an der Luftfilterpatrone 14 beziehungsweise dem Gehäuse 52 angeordnet sein.

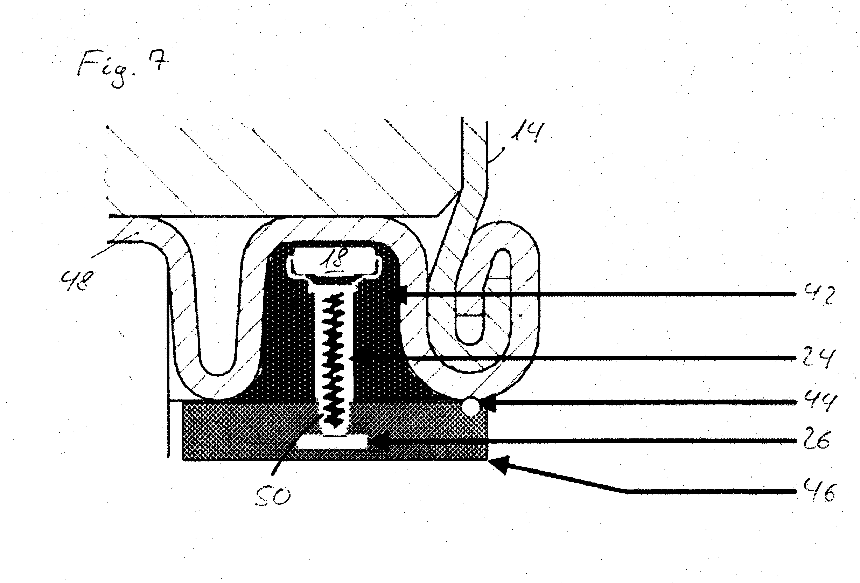

Figur 7 zeigt eine seitliche Schnittansicht von Einrichtungen in verbundenem Zustand. Die in Figur 7 dargestellten Einrichtungen sind im Wesentlichen mit den aus Figur 6 beschriebenen Einrichtungen identisch, wobei jedoch der Anschluss 26 in den Mantel 46 eingelassen ist, so dass der Kontaktstift 24 deutlich über die Füllung 42 hinausragen muss. Zu diesem Zweck kann der Kontaktstift 24 zusätzlich durch eine Feder 50 vorgespannt und in Montagerichtung der Luftfilterpatrone 14 beweglich sein. Füllung 42 und Mantel 46 sind vorzugsweise als Isolator ausgeführt und der Kontaktstift 24 kann mehrere voneinander isolierte elektrische Verbindungen gleichzeitig herstellen, wie im Zusammenhang mit Figur 9 noch beschrieben wird.

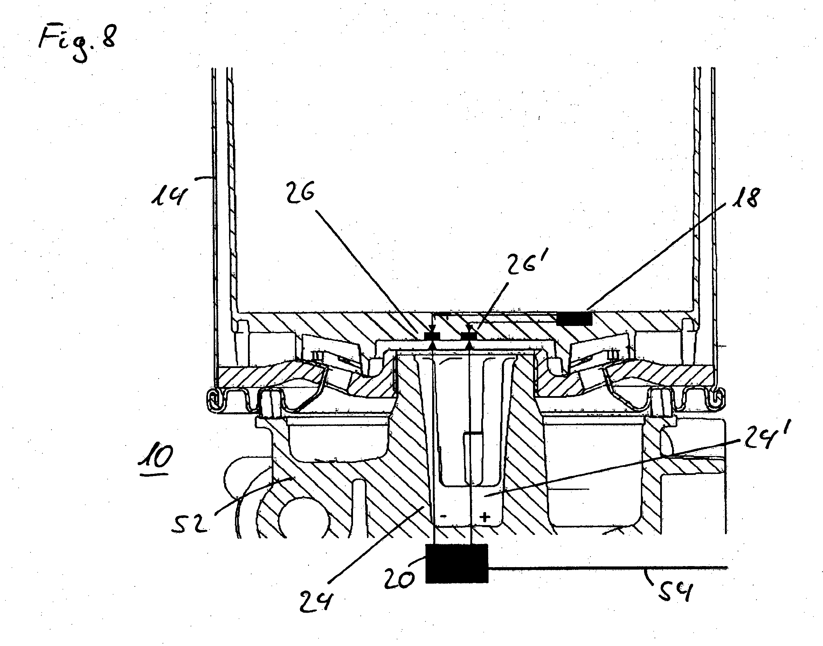

Figur 8 zeigt eine seitliche Schnittansicht eines Systems 10 in einer weiteren Ausführungsform. Im Gegensatz zu den aus den Figuren 6 und 7 bekannten Ausführungsformen ist der Anschluss 26 bei der Ausführungsform gemäß Figur 8 Bestandteil der Luftfilterpatrone 14 während der Kontaktstift 24 an dem Gehäuse 52 der Luftaufbereitungsanlage 12 angeordnet ist. Weiterhin ist neben dem Kontaktstift 24 ein weiterer Kontaktstift 24' vorgesehen und neben dem Anschluss 26 ein weiterer Anschluss 26'. Die dargestellte Luftfilterpatrone 14 beziehungsweise das dargestellte Gehäuse 52 können beispielsweise über einen Bajonettverschluss miteinander gekoppelt sein, wobei der Kontaktstift 24 und/oder der weitere Kontaktstift 24' dann als eine Zentrierhilfe bei der Montage der Luftfilterpatrone 14 wirken können. Die Montage der Luftfilterpatrone 14 erfolgt dann durch einfaches passgenaues Aufsetzen auf das Gehäuse 52, wobei dann ein zusätzlicher nicht dargestellter Bajonettring das Gehäuse der Luftfilterpatrone an dem Gehäuse 52 arretiert. Die Erfassungseinrichtung 20 kann über einen Anschluss an einen CAN-Bus 54 verfügen.

Figur 9 zeigt eine Aufsicht auf ein Gehäuse einer Luftaufbereitungsanlage. Das dargestellte Gehäuse 52 weist ein Schraubgewinde 28 sowie Anschlüsse 26, 26' in dem Mantel 46 auf. Die in dem Mantel 46 angeordneten Anschlüsse 26, 26' können unterschiedlich ausgeführt werden. Beispielsweise ist der in Figur 9 dargestellte Anschluss 26 einpolig ausgeführt und umfasst das Schraubgewinde 28 zur Hälfte also zu 180 Grad. Konsequenterweise kann dann ein weiterer Anschluss 26' vorgesehen sein, der von dem Anschluss 26 elektrisch getrennt ist und die andere Hälfte des Schraubgewindes 28 umfassen kann, wobei der Anschluss 26 und der weitere Anschluss 26' jeweils durch einen eigenen in dieser Darstellung nicht dargestellten Kontaktstift berührt werden können. Der Anschluss 26 und der weitere Anschluss 26' können als eine in den Mantel 46 eingelassene Rinne ausgeführt sein, wobei die Ränder der Rinne sowohl eine Rastfunktion bei der Montage einer Luftfilterpatrone für den oder die Kontaktstifte als auch mehrere voneinander elektrisch getrennte Verbindungen bereitstellen können, wie sie beispielsweise von einem mehrpoligen Klinkenstecker, wie er beispielsweise bei einem Kopfhörer Verwendung findet, bekannt sind. Die in Figur 9 dargestellte Ausführungsform kann bereits eine einfache Zentrierhilfe bei der Montage einer Luftfilterpatrone bieten, wenn die Anschlüsse 26, 26' als konzentrische Rinne ausgeführt sind und ein an der Luftfilterpatrone 14 angeordneter Kontaktstift 24 bei der Montage zuerst in Kontakt mit dem Gehäuse 52 tritt, bevor das Schraubgewinde 28 die zu montierende Filterpatrone 14 berührt. Neben der dargestellten winkelabhängigen Unterteilung in den Anschluss 26 und den Anschluss 26' sind auch mehrere Unterteilungen der Anschlussflächen in radialer Richtung denkbar um zusätzliche voneinander elektrisch isolierte Verbindungen bereitzustellen. Weiterhin erlaubt die winkelabhängige Unterteilung auch mehr als zwei elektrisch getrennte Verbindungen. Die korrekte Montage einer Luftfilterpatrone kann dann beispielsweise anhand der korrekten Zuordnung zwischen einzelnen Kontaktstiften und einzelnen Anschlüssen 26, 26' festgestellt werden. Alternativ zu der dargestellten Ausführungsform des Anschlusses 26 beziehungsweise 26' als kreisförmiger Ring kann auch eine asymmetrische Anordnung eines Anschlusses für einen Kontaktstift vorgesehen sein, wobei dann das Schraubgewinde 28 entfällt und die Luftfilterpatrone 14 statt dessen nur aufgesetzt und über einen Bajonettverschluss an dem Gehäuse 52 fixiert wird.

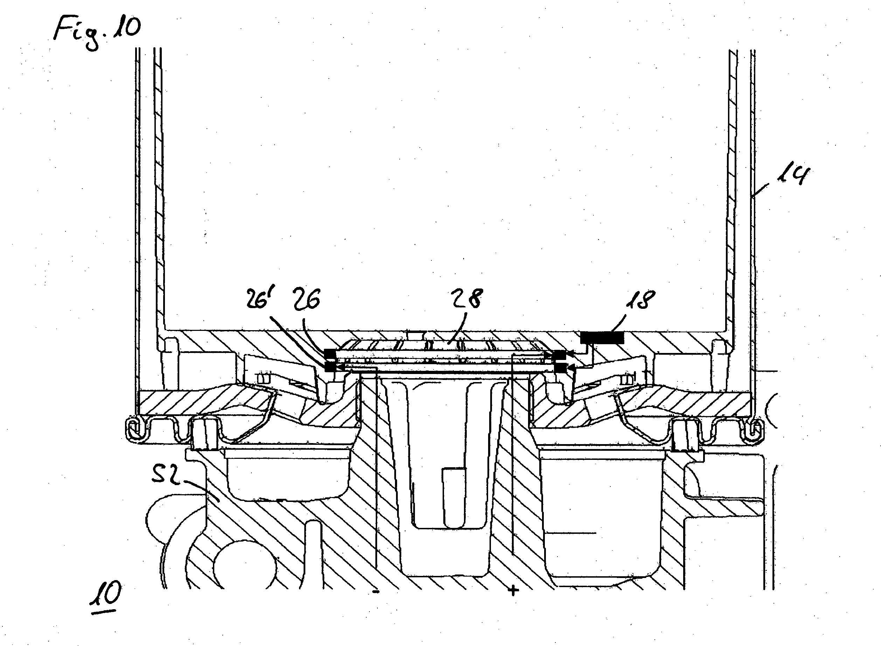

Figur 10 zeigt eine seitliche Schnittansicht eines erfindungsgemäßen Systems mit an einem Schraubgewinde angeordneten elektrischen Kontaktstellen. Dargestellt ist die Integration des Anschlusses 26 und des weiteren Anschlusses 26' in das Schraubgewinde, wobei der Kontakt zum Schließen der elektrischen Verbindung über korrespondierende Flächen des Schraubgewindes 28 an der Luftfilterpatrone hergestellt wird. Auch auf diese Weise ist die korrekte Montage einer Luftfilterpatrone 14 an dem Gehäuse 52 über die korrekte Zuordnung der einzelnen Kontaktflächen des Anschlusses 26 beziehungsweise 26' detektierbar. Beispielsweise kann bei einer nicht ausreichend fest angeschraubten Luftfilterpatrone 14 beispielsweise eine Stromversorgung der Identifikationsmittel 18 gestört sein, da eine entsprechende an dem Schraubgewinde 28 vorhandene Kontaktfläche der Luftfilterpatrone 14 noch nicht mit der korrespondierenden Kontaktfläche an dem Gehäuse 52 in Berührung steht. Die Einrichtungen zum Herstellen einer elektrischen Verbindung umfassen bei dieser Ausführungsform also im Wesentlichen aus dem Schraubgewinde 28.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: System
- 12: Luftaufbereitungsanlage
- 14: Luftfilterpatrone
- 16: Speicher
- 18: Identifikationsmittel
- 20: Erfassungseinrichtung
- 22: elektrische Verbindung
- 22': weitere elektrische Verbindung
- 24: Kontaktstift
- 24': weiterer Kontaktstift
- 26: Anschluss
- 26': weiterer Anschluss
- 28: Schraubgewinde
- 32: Steuergerät
- 34: Interface
- 36: UART
- 38: Schaltkreis
- 40: weiterer Schaltkreis
- 42: Füllung
- 44: Dichtung
- 46: Mantel
- 48: Bodenplatte
- 50: Feder
- 52: Gehäuse
- 54: CAN-Bus
- 56: Mikroprozessor
- 58: Sensor

## Patentansprüche

1. System (10) aus einer in einem Nutzfahrzeug angeordneten Luftaufbereitungsanlage (12) und einer Luftfilterpatrone (14) zur Montage an der Luftaufbereitungsanlage (12), wobei die Luftfilterpatrone (14) einen Speicher (16) umfassende Identifikationsmittel (18) aufweist, die im montierten Zustand mit einer an der Luftaufbereitungsanlage (12) angeordneten Erfassungseinrichtung (20) gekoppelt sind, wobei der Informationsgehalt des Speichers (16) durch die Erfassungseinrichtung (20) erfassbar ist, wobei die Luftaufbereitungsanlage (12) und die Luftfilterpatrone (14) Einrichtungen umfassen, die im montierten Zustand der Luftfilterpatrone (14) miteinander koppelbar sind und zumindest eine elektrische Verbindung (22) zwischen der Erfassungseinrichtung (20) und den Identifikationsmitteln (18) herstellen, und wobei die Luftfilterpatrone (14) zur Montage an der Lauftaufbereitungsanlage (12) ein Schraubgewinde (28) umfasst, **dadurch gekennzeichnet,**
- **dass** der Informationsgehalt des Speichers (16) durch die Erfassungseinrichtung (20) veränderbar ist,
- **dass** die Einrichtungen einen Anschluss (26) mit einer Kontaktfläche und einen weiteren Anschluss (26') mit einer weiteren Kontaktfläche umfassen, die in das Schraubgewinde (28) integriert sind, und
- **dass** die zumindest eine elektrische Verbindung (22) im montierten Zustand der Luftfilterpatrone (14) über mit der Kontaktfläche und der weiteren Kontaktfläche korrespondierende Kontaktflächen an einem Gehäuse (52) der Luftaufbereitungsanlage (12) geschlossen ist.

2. Luftfilterpatrone (14) zur Montage an einer in einem Nutzfahrzeug angeordneten Luftaufbereitungsanlage (12), wobei die Luftfilterpatrone (14) einen Speicher (16) umfassende Identifikationsmittel (18) aufweist, die im montierten Zustand mit einer an der Luftaufbereitungsanlage (12) angeordneten Erfassungseinrichtung (20) gekoppelt sind, wobei der Informationsgehalt des Speichers (16) durch die Erfassungseinrichtung (20) erfassbar ist, wobei die Luftaufbereitungsanlage (12) und die Luftfilterpatrone (14) Einrichtungen umfassen, die im montierten Zustand der Luftfilterpatrone (14) miteinander koppelbar sind und zumindest eine elektrische Verbindung (22) zwischen der Erfassungseinrichtung (20) und den Identifikationsmitteln (18) herstellen, und wobei die Luftfilterpatrone (14) zur Montage an der Lauftaufbereitungsanlage (12) ein Schraubgewinde (28) umfasst, **dadurch gekennzeichnet,**
- **dass** der Informationsgehalt des Speichers (16) durch die Erfassungseinrichtung (20) veränderbar ist,
- **dass** die Einrichtungen einen Anschluss (26) mit einer Kontaktfläche und einen weiteren Anschluss (26') mit einer weiteren Kontaktfläche umfassen, die in das Schraubgewinde (28) integriert sind, und
- **dass** die zumindest eine elektrische Verbindung (22) im montierten Zustand der Luftfilterpatrone (14) über mit der Kontaktfläche und der weiteren Kontaktfläche korrespondierende Kontaktflächen an einem Gehäuse (52) der Luftaufbereitungsanlage (12) geschlossen sind.

3. Luftaufbereitungsanlage (12) die zur Aufnahme einer Luftfilterpatrone (14) ausgelegt ist, wobei die Luftfilterpatrone (14) einen Speicher (16) umfassende Identifikationsmittel (18) aufweist, die im montierten Zustand mit einer an der Luftaufbereitungsanlage (12) angeordneten Erfassungseinrichtung (20) gekoppelt sind, wobei der Informationsgehalt des Speichers (16) durch die Erfassungseinrichtung (20) erfassbar ist, wobei die Luftaufbereitungsanlage (12) und die Luftfilterpatrone (14) Einrichtungen umfassen, die im montierten Zustand der Luftfilterpatrone (14) miteinander koppelbar sind und zumindest eine elektrische Verbindung (22) zwischen der Erfassungseinrichtung (20) und den Identifikationsmittein (18) herstellen, und wobei die Luftfilterpatrone (14) zur Montage an der Lauftaufbereitungsanlage (12) ein Schraubgewinde (28) umfasst, **dadurch gekennzeichnet,**
- **dass** der Informationsgehalt des Speichers (16) durch die Erfassungseinrichtung (20) veränderbar ist,
- **dass** die Einrichtungen einen Anschluss (26) mit einer Kontaktfläche und einen weiteren Anschluss (26') mit einer weiteren Kontaktfläche umfassen, die in das Schraubgewinde (28) integriert sind, und
- **dass** die zumindest eine elektrische Verbindung (22) im montierten Zustand der Luftfilterpatrone (14) über mit der Kontaktfläche und der weiteren Kontaktfläche korrespondierende Kontaktflächen an einem Gehäuse (52) der Luftaufbereitungsanlage (12) geschlossen sind.

## Claims

1. System (10) comprising an air preparation assembly (12) allocated to a commercial vehicle and an air filter cartridge (14) for installing on the air preparation assembly (12), wherein the air filter cartridge (14) comprises identification means (18) including a memory (16), which in the installed state are coupled to a detection device (20) located on the air preparation assembly (12), wherein the information content of the memory (16) can be detected by the detection device (20), wherein the air preparation assembly (12) and the air filter cartridge (14) comprise devices which can be coupled to one another in the installed state of the air filter cartridge (14) and which establish at least one electric connection (22) between the detection device (20) and the identification means (18), and wherein the air filter cartridge (14) has a screw thread (28) for mounting on the air preparation assembly (12), **characterised in that**
- the information content of the memory (16) can be changed by the detection device (20),
- the devices comprise a connection (26) with a contact face and a further connection (26') with a further contact face, which are integrated into the screw thread (28), and
- the at least one electric connection (22) is closed in the installed state of the air filter cartridge (14) via contact faces provided on a housing (52) of the air preparation assembly (12) and corresponding to the contact face and to the further contact face.

2. Air filter cartridge (14) for installing on an air preparation assembly (12), wherein the air filter cartridge (14) comprises identification means (18) including a memory (16), which in the installed state are coupled to a detection device (20) located on the air preparation assembly (12), wherein the information content of the memory (16) can be detected by the detection device (20), wherein the air preparation assembly (12) and the air filter cartridge (14) comprise devices which can be coupled to one another in the installed state of the air filter cartridge (14) and which establish at least one electric connection (22) between the detection device (20) and the identification means (18), and wherein the air filter cartridge (14) has a screw thread (28) for mounting on the air preparation assembly (12), **characterised in that**
- the information content of the memory (16) can be changed by the detection device (20),
- the devices comprise a connection (26) with a contact face and a further connection (26') with a further contact face, which are integrated into the screw thread (28), and
- the at least one electric connection (22) is closed in the installed state of the air filter cartridge (14) via contact faces provided on a housing (52) of the air preparation assembly (12) and corresponding to the contact face and to the further contact face.

3. Air preparation assembly (12) designed for accommodating an air filter cartridge (14), wherein the air filter cartridge (14) comprises identification means (18) including a memory (16), which in the installed state are coupled to a detection device (20) located on the air preparation assembly (12), wherein the information content of the memory (16) can be detected by the detection device (20), wherein the air preparation assembly (12) and the air filter cartridge (14) comprise devices which can be coupled to one another in the installed state of the air filter cartridge (14) and which establish at least one electric connection (22) between the detection device (20) and the identification means (18), and wherein the air filter cartridge (14) has a screw thread (28) for mounting on the air preparation assembly (12), **characterised in that**
- the information content of the memory (16) can be changed by the detection device (20),
- the devices comprise a connection (26) with a contact face and a further connection (26') with a further contact face, which are integrated into the screw thread (28), and
- the at least one electric connection (22) is closed in the installed state of the air filter cartridge (14) via contact faces provided on a housing (52) of the air preparation assembly (12) and corresponding to the contact face and to the further contact face.

## Revendications

1. Système (10) composé d'une installation (12) de préparation de l'air mise dans un véhicule utilitaire et d'une cartouche (14) de filtre à air à monter sur l'installation (12) de préparation de l'air, la cartouche (14) de filtre à air ayant des moyens (18) d'identification, qui comprennent une mémoire (16) et qui, à l'état monté, sont couplés à un dispositif (20) de détection mis sur l'installation (12) de préparation de l'air, le contenu en information de la mémoire (16) pouvant être détecté par le dispositif (20) de détection, l'installation (22) de préparation de l'air et la cartouche (14) de filtre à air comprenant des dispositifs qui, lorsque la cartouche (14) de filtre à air est à l'état monté, peuvent être couplés entre eux et procurent au moins une liaison (22) électrique entre le dispositif (20) de détection et les moyens (18) d'identification, et dans lequel la cartouche (14) de filtre à air comprend un filet (28) de vis pour le montage sur l'installation (12) de préparation de l'air, **caractérisé**
- **en ce que** le contenu en information de la mémoire (16) peut être modifié par le dispositif (20) de détection,
- **en ce que** les dispositifs comprennent une borne (26) ayant une surface de contact et une autre borne (26') ayant une autre surface de contact, qui sont intégrées dans le filet (28) de vis, et
- **en ce que** la au moins une liaison (22) électrique est, lorsque la cartouche (14) de filtre est à l'état monté, fermée sur une enveloppe (52) de l'installation (12) de préparation de l'air par des surfaces de contact correspondant à la surface de contact et à l'autre surface de contact.

2. Cartouche (14) de filtre à air à monter sur une installation (12) de préparation de l'air mise dans un véhicule utilitaire, la cartouche (14) de filtre à air ayant des moyens (18) d'identification, qui comprennent une mémoire (16) et qui, à l'état monté, sont couplés à un dispositif (20) de détection mis sur l'installation (12) de préparation de l'air, la teneur en information de la mémoire (16) pouvant être détectée par le dispositif (20) de détection, l'installation (12) de préparation de l'air et la cartouche (14) de filtre à air comprenant des dispositifs, qui, lorsque la cartouche (14) de filtre à air est à l'état monté, peuvent être couplés entre eux et procurent au moins une liaison (22) électrique entre le dispositif (20) de détection et les moyens (18) d'identification, et dans laquelle la cartouche (14) de filtre à air comprend un filet (28) de vis pour le montage sur l'installation (12) de préparation de l'air, **caractérisée**
- **en ce que** le contenu en information de la mémoire (16) peut être modifié par le dispositif (20) de détection,
- **en ce que** les dispositifs comprennent une borne (26) ayant une surface de contact et une autre borne (26') ayant une autre surface de contact, qui sont intégrées dans le filet (28) de vis, et
- **en ce que** la au moins une liaison (22) électrique est, lorsque la cartouche (14) de filtre est à l'état monté, fermée sur une enveloppe (52) de l'installation (12) de préparation de l'air par des surfaces de contact correspondant à la surface de contact et à l'autre surface de contact.

3. Installation (12) de préparation de l'air, qui est conçue pour la réception d'une cartouche (14) de filtre à air, la cartouche (14) de filtre à air ayant des moyens (18) d'identification, qui comprennent une mémoire (16) et qui, à l'état monté, sont couplés à un dispositif (20) de détection mis sur l'installation (12) de préparation de l'air, le contenu en information de la mémoire (16) pouvant être détecté par le dispositif (20) de détection, l'installation (12) de préparation de l'air et la cartouche (14) de filtre à air comprenant des dispositifs, qui, lorsque la cartouche (14) de filtre à air est à l'état monté, peuvent être couplés entre eux et procurent au moins une liaison (22) électrique entre le dispositif (20) de détection et les moyens (18) d'identification, et dans laquelle la cartouche (14) de filtre à air comprend un filet (28) de vis pour le montage sur l'installation (12) de préparation de l'air, **caractérisée**
- **en ce que** le contenu en information de la mémoire (16) peut être modifié par le dispositif (20) de détection,
- **en ce que** les dispositifs comprennent une borne (26) ayant une surface de contact et une autre borne (26') ayant une autre surface de contact, qui sont intégrées dans le filet (28) de vis, et
- **en ce que** la au moins une liaison (22) électrique est, lorsque la cartouche (14) de filtre est à l'état monté, fermée sur une enveloppe (52) de l'installation (12) de préparation de l'air par des surfaces de contact correspondant à la surface de contact et à l'autre surface de contact.
